# EUROPÄISCHE PATENTSCHRIFT

(11) **EP 2 384 943 B1**
(45) Veröffentlichungstag und Bekanntmachung des Hinweises auf die Patenterteilung: **20.11.2013**
(21) Anmeldenummer: 10195178.8
(22) Anmeldetag: 15.12.2010
(51) Int. Cl.: B60T 13/66, B60T 13/68, B60T 15/18, F16K 11/044

(54) **Ventileinrichtung, elektrisch betätigbares Feststellbremssystem und Verfahren zum Steuern eines elektrisch betätigbaren Feststellbremssystems**
Valve device, electrically actuated handbrake and method for controlling same
Dispositif de soupape, système de frein de stationnement pouvant être actionné de manière électrique et procédé de commande d'un système de frein de stationnement pouvant être actionné de manière électrique

(30) Priorität: 21.12.2009 DE 102009059900
(43) Veröffentlichungstag der Anmeldung: 09.11.2011
(73) Patentinhaber: KNORR-BREMSE Systeme für Nutzfahrzeuge GmbH, 80809 München (DE)
(72) Erfinder: Schnittger, Karsten, 80935 München (DE); Kaupert, Oliver, 80995 München (DE); Uslu, Mustapha, 81373 München (DE)
(74) Vertreter: Mattusch, Gundula

(56) Entgegenhaltungen:
- DE-A1-102007 051 150
- DE-A1-102007 061 908
- DE-B3-102008 007 877

## Beschreibung

Die Erfindung betrifft eine Ventileinrichtung für eine pneumatische Bremsanlage eines Nutzfahrzeugs, mit
- einem Ventilgehäuse,
- einem Steuerkolben, der über radiale Dichtungen in dem Ventilgehäuse axial verschiebbar geführt ist,
- einem ersten Arbeitsanschluss,
- einem zweiten Arbeitsanschluss,
- einem pneumatischen Steuereingang und
- einem Entlüftungsanschluss,
- wobei in einem ersten Schaltzustand der Ventileinrichtung der Steuereingang belüftet ist, wodurch der Steuerkolben gegen eine Federkraft in einer ersten einen ersten Ventilsitz abdichtenden Endstellung gehalten wird, so dass der erste Ventilsitz den zweiten Arbeitsanschluss gegen den Entlüftungsanschluss abdichtet, und wodurch der Steuerkolben von einem zweiten Ventilsitz abgehoben ist, so dass der erste Arbeitsanschluss mit dem zweiten Arbeitsanschluss verbunden ist, und
- wobei in einem zweiten Schaltzustand der Ventileinrichtung der Steuereingang entlüftet ist, wodurch der Steuerkolben durch die Federkraft von dem ersten Ventilsitz abgehoben ist, so dass der erste Ventilsitz den zweiten Arbeitsanschluss mit dem Entlüftungsanschluss verbindet, und wodurch der Steuerkolben mit der Federkraft in einer zweiten den zweiten Ventilsitz abdichtenden Endstellung gehalten wird, so dass der zweite Ventilsitz den ersten Arbeitsanschluss gegen den zweiten Arbeitsanschluss abdichtet.

Weiterhin betrifft die Erfindung ein elektrisch betätigbares Feststellbremssystem für eine pneumatische Bremsanlage, das eine derartige Ventileinrichtung als Steuerventileinrichtung aufweist.

Die Erfindung betrifft auch ein Verfahren zum Steuern eines elektrisch betätigbaren Feststellbremssystems, insbesondere zum Überführen des elektrisch betätigbaren Feststellbremssystems von einem Fahrzustand in einen Parkzustand.

Die vorliegende Offenbarung befasst sich mit elektrisch betätigbaren Feststellbremssystemen, wie sie beispielsweise in der DE 10 2008 007 877 B3 beschrieben sind. Eine zentrale sicherheitsrelevante Anforderung an derartige Systeme besteht darin, dass ein Stromausfall nicht zu einer Zustandsänderung der Feststellbremsen führen darf - befindet sich die Feststellbremse in ihrem Parkzustand, so muss auch bei Stromausfall der Parkzustand aufrechterhalten werden, um so ein unbeabsichtigtes Wegrollen des Nutzfahrzeugs in jedem Fall zu verhindern, befindet sich die Feststellbremse in einem Fahrzustand, so darf bei Stromausfall die Feststellbremse nicht schlagartig eingelegt werden, da dies während der Fahrt zu gefährlichen Situationen führen kann.

Um diesen sicherheitsrelevanten Anforderungen zu genügen, können bistabile Steuerventile eingesetzt werden. Diese können elektrisch oder pneumatisch ansteuerbar sein. Die vorliegende Erfindung befasst sich mit pneumatisch ansteuerbaren Schaltventileinrichtungen, die in der Weise in ein elektrisch betätigbares Feststellbremssystem eingebunden sind, dass eine Bistabilität gegeben ist und somit den vorstehend erwähnten sicherheitsrelevanten Anforderungen genügt wird.

Elektrisch betätigbare Feststellbremssysteme und insbesondere die erwähnten pneumatischen Steuerventileinrichtungen sind so auszulegen, dass absolute Schaltsicherheit gewährleistet ist. Werden die Druckverhältnisse im Feststellbremssystem also umgestellt, um ein Umschalten der Steuerventileinrichtung zu bewirken, so muss die Steuerventileinrichtung sicher schalten können, und dies bei jeglichen äußeren Umständen, insbesondere auch bei tiefen Temperaturen, welche ein Umschalten der Schaltventileinrichtung insbesondere aufgrund erhöhter Reibungskräfte behindern können.

Der Erfindung liegt die Aufgabe zugrunde, ein Konzept zur Verfügung zu stellen, bei dem die Bistabilität einer pneumatischen Steuerventileinrichtung für ein elektrisch betätigbares Feststellbremssystem gewährleistet ist, wobei absolute Schaltsicherheit auch bei tiefen Temperaturen gegeben sein soll. Dabei sollen insbesondere Lösungen angeboten werden, welche mit einem möglichst geringen Verschleiß der Systemkomponenten und insbesondere der pneumatischen Steuerventileinrichtung einhergehen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem eingangs genannten gattungsgemäßen Stand der Technik dadurch auf, dass der erste Ventilsitz in Bewegungsrichtung des Steuerkolbens verschiebbar ist. Sitzt der Steuerkolben auf dem ersten Ventilsitz auf, so befindet sich das Feststellbremssystem in einem Fahrzustand. Um von diesem Fahrzustand einen Parkzustand zu erreichen, muss der Steuerkolben von dem Ventilsitz abheben und zu diesem Zweck im Ventilgehäuse verschoben werden. Einer solchen Verschiebung wirken insbesondere zwei Effekte entgegen, nämlich ein Anhaften des Steuerkolbens an dem Ventilsitz und eine hohe Haftreibung der den Steuerkolben im Ventilgehäuse führenden radialen Dichtungen, die beispielsweise als O-Ringe realisiert sein können. Durch die Verschiebbarkeit des Ventilsitzes in Bewegungsrichtung des Steuerkolbens gelingt es nun, diese beiden Effekte zu trennen. Bei der anfänglichen Bewegung des Steuerkolbens muss nämlich zunächst nur die Haftreibung der radialen Dichtungen überwunden werden, denn der Ventilsitz folgt dem Steuerkolben bei der anfänglichen Bewegung. Erst dann, wenn bereits nur noch die bis zu einer Größenordnung niedrigere Gleitreibung von den radialen Dichtungen aufgebracht wird, muss der Steuerkolben gegen die Anhaftkräfte von dem Ventilsitz abgehoben werden.

Dabei kann nützlicherweise vorgesehen sein, dass der erste Ventilsitz mit einer Federkraft beaufschlagt ist, so dass der erste Ventilsitz, wenn der Steuerkolben seine erste Endstellung verlässt, der Bewegung des Steuerkolbens folgt. Diese Federkraft unterstützt die anfängliche durch die Haftreibung der radialen Dichtungen beeinträchtige Bewegung des Steuerkolbens. Soll umgekehrt die Steuerventileinrichtung von ihrem Parkzustand in den Fahrzustand überführt werden, so muss der Steuerkolben zunächst nur gegen die dem Steuerkolben direkt zugeordnete Feder bewegt werden, so dass zunächst eine vergleichsweise geringe Federkraft wirkt, wenn, ausgehend vom Parkzustand, noch die hohe Haftreibung der Radialdichtungen vorliegt. Wenn der Steuerkolben auf den ersten Ventilsitz aufsetzt, wirkt bei der daran anschließenden weiteren Bewegung auch die dem ersten Ventilsitz zugeordnete Federkraft. Die somit erhöhte Federkraft wird die weitere Bewegung des Steuerkolbens jedoch nicht aufhalten, denn bei dieser weiteren Bewegung wirken wiederum nur noch die Gleitreibungskräfte der radialen Dichtungen.

Um ein sicheres und definiertes Abheben des Steuerkolbens von dem ersten Ventilsitz zu gewährleisten, ist nützlicherweise vorgesehen, dass die Verschiebbarkeit des ersten Ventilsitzes in der Weise begrenzt ist, dass der erste Ventilsitz dem Steuerkolben nicht bis zu seiner zweiten Endstellung folgen kann. Dies ist vorzugsweise durch einen Anschlag realisiert, der eine Weiterbewegung des beweglichen Ventilsitzes ausschließt.

Die Erfindung ist in besonders vorteilhafter Weise dadurch weitergebildet, dass eine dem ersten Ventilsitz abgewandte Wirkfläche eines den ersten Ventilsitz tragenden Ventilsitzkolbens in einem Entlüftungsraum angeordnet ist, der sich zumindest in dem ersten Schaltzustand der Ventileinrichtung auf dem Druckniveau des Entlüftungsanschlusses befindet. Unter einer solchen Wirkfläche wird eine Fläche verstanden, die durch mehr als nur Anschrägungen oder Randbereiche des Ventilsitzkolbens definiert ist. Insbesondere kann die Wirkfläche durch die gesamte oder die nahezu gesamte dem ersten Ventilsitz abgewandte Fläche des Ventilsitzkolbens gebildet sein. Somit entsteht durch die Belüftung des Entlüftungsanschlusses eine Kraft, die in dieselbe Richtung wirkt, wie die Federkraft, so dass hierdurch die Bewegung des Steuerkolbens gegen die Haftreibung der radialen Dichtungen nochmals unterstützt wird. Da dies vorzugsweise so realisiert ist, dass der Ventilsitzkolben mit seiner dem Ventilsitz abgewandten Wirkfläche im Fahrzustand nicht unmittelbar am Gehäuse, sondern mittelbar über die Feder an dem Gehäuse abgestützt ist, kann durch die Federkraft weiterhin die auf den ersten Ventilsitz wirkende abdichtende Kraft eingestellt werden. Diese Kraft muss so groß sein, dass der erste Ventilsitz sicher abdichtet, darf aber so niedrig eingestellt werden, dass das Anhaften des Steuerkolbens im Vergleich zu Lösungen mit festem Ventilsitz geringer sein wird und bei dem weiterhin aufgrund der verringerten Ventilsitzkräfte ein Verschleiß des vorzugsweise aus einem Elastomer bestehenden Ventilsitzes verlangsamt wird.

Die Erfindung besteht weiterhin in einem elektrisch betätigbaren Feststellbremssystem für eine pneumatische Bremsanlage, mit einer Steuerventileinrichtung der vorgenannten Art, wobei
- der erste Arbeitsanschluss wahlweise von einer Druckluftquelle mit Druckluft versorgt oder entlüftet werden kann,
- der zweite Arbeitsanschluss mit einem Druckluftverbraucher koppelbar ist,
- der pneumatische Steuereingang zumindest mittelbar mit dem Steuereingang eines Relaisventils für die Feststellbremse gekoppelt ist und
- der Entlüftungsanschluss mit einer Steuer- und Entlüftungsventileinrichtung gekoppelt ist.

Die Vorzüge eines solchen elektrisch betätigbaren Feststellbremssystems wurden bereits im Zusammenhang mit der Steuerventileinrichtung vorstehend diskutiert.

Die vorliegende Erfindung betrifft auch ein Verfahren zum Überführen eines solchen elektrisch betätigbaren Feststellbremssystems von einem Fahrzustand in einen Parkzustand, bei dem der Entlüftungsanschluss durch die Steuer- und Entlüftungsventileinrichtung belüftet wird während der Steuereingang entlüftet wird.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm eines elektrisch betätigbaren Feststellbremssystems;
- Figur 2: eine Steuerventileinrichtung mit einem verschiebbaren Ventilsitz in einer Fahrstellung;
- Figur 3: eine Steuerventileinrichtung mit einem verschiebbaren Ventilsitz in einer Zwischenstellung;
- Figur 4: eine Steuerventileinrichtung mit einem verschiebbaren Ventilsitz in einer Parkstellung;
- Figur 5: eine Steuerventileinrichtung mit einem festen Ventilsitz in einer Fahrstellung;
- Figur 6: eine Steuerventileinrichtung mit einem festen Ventilsitz in einer Parkstellung;
- Figur 7: eine Steuerventileinrichtung mit einem zwei radiale Dichtungen aufweisenden Steuerkolben in einer Fahrstellung;
- Figur 8: eine Steuerventileinrichtung mit einem zwei radiale Dichtungen aufweisenden Steuerkolben in einer Parkstellung;
- Figur 9: eine schematische Darstellung eines elektrisch betätigbaren Feststellbremssystems in einem ersten Zustand;
- Figur 10: eine schematische Darstellung eines elektrisch betätigbaren Feststellbremssystems in einem zweiten Zustand; und
- Figur 11: eine schematische Darstellung eines elektrisch betätigbaren Feststellbremssystems in einem dritten Zustand.

Bei der nachfolgenden Beschreibung der Schaltungsdiagramme und der Schnittansichten von Ventileinrichtungen bezeichnen gleiche Bezugszeichen gleiche oder vergleichbare Komponenten. Die Schaltungen umfassen als zentrale Einrichtungen 3/2-Wegeventile. Diese können jeweils durch zwei 2/2-Wegeventile ersetzt werden, wobei die anhand der 3/2-Wegeventile erläuterten Grundsätze dann im Rahmen der vorliegenden Erfindung auf die 2/2-Wegeventilgruppen zu übertragen sind.

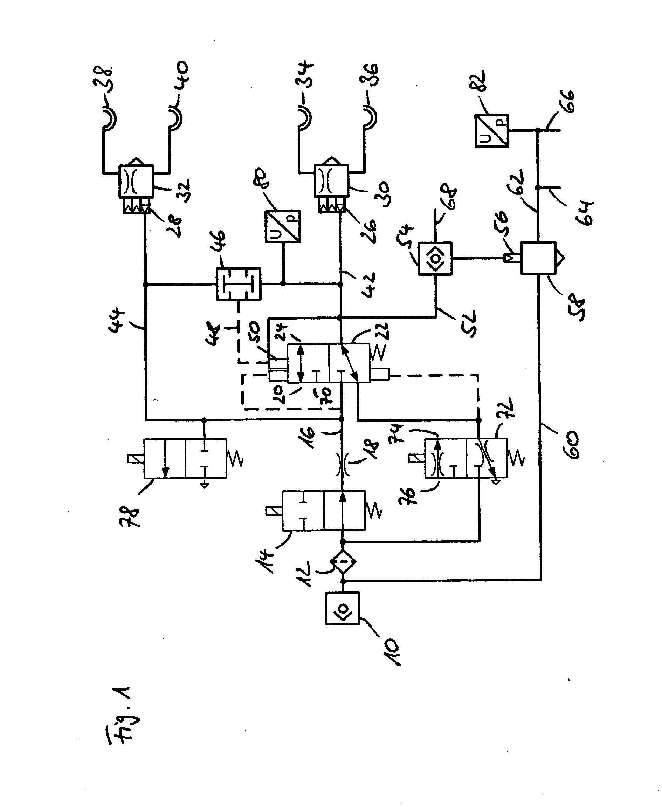

Figur 1 zeigt ein Schaltungsdiagramm eines elektrisch betätigbaren Feststellbremssystems. Das elektrisch betätigbare Feststellbremssystem ist über ein Rückschlagventil 10 mit einer nicht dargestellten Druckluftaufbereitungsanlage verbunden. Auf das Rückschlagventil 10 folgt eine optionale Filtereinheit 12, über die Druckluft einem Versorgungsmagnetventil 14, das als 2/2-Wegeventil ausgelegt ist, zugeführt wird. An den Ausgang des Versorgungsmagnetventils 14 ist über einen Versorgungsleitungsabschnitt 16 und eine optionale Drossel 18 ein Arbeitsanschluss 20 einer Steuerventileinrichtung 22 angeschlossen. Die Steuerventileinrichtung 22 ist als pneumatisch ansteuerbares 3/2-Wegeventil ausgelegt. Ein zweiter Arbeitsanschluss 24 der Steuerventileinrichtung 22 führt zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen Anhängersteuerleitungszweig 44 mit dem Versorgungsleitungszweig 16 verbunden. Es hat einen Versorgungsanschluss 38 und einen Steueranschluss 40. Die Anhängersteuerleitungszweige 42, 44 sind mit Eingängen eines Select-Low-Ventils 46 verbunden, dessen Ausgang über eine Steuerleitung 48 mit einem Steuereingang 50 der Steuerventileinrichtung 22 verbunden ist. Das Select-Low-Ventil arbeitet so, dass an seinem Ausgang, das heißt in der Steuerleitung 48, der niedrigere Eingangsdruck ansteht, das heißt der niedrigere Druck aus den beiden Anhängersteuerungsleitungszweigen 42, 44. Die Steuerleitung 48 steht weiterhin über eine Relaissteuerleitung 52 und ein Wechselventil 54 mit dem Relaissteuereingang 56 eines Relaisventils 58 in Verbindung. Das Relaisventil 58 bezieht über eine Relaisversorgungsleitung 60 Druckluft von einer Stelle stromaufwärts des Versorgungsmagnetventils 14. Eine Relaisausgangsleitung führt zu Leitungszweigen 64, 66, an denen nicht dargestellte Federspeicherzylinder angeschlossen sind. An dem Wechselventil 54 ist ferner eine Betriebsbremsleitung 68 angeschlossen. Mit einem Entlüftungsanschluss 70 der Steuerventileinrichtung 22 ist ein Anschluss 74 einer Steuer- und Entlüftungsventileinrichtung 72 verbunden. Ein weiterer Anschluss 76 der Steuer- und Entlüftungsventileinrichtung 72 wird von einem Punkt zwischen der Filtereinheit 12 und dem Versorgungsmagnetventil 14 mit Druckluft versorgt. Weiterhin ist ein als ein 2/2-Wegeventil ausgelegtes Entlüftungsventil 78 vorgesehen, das mit dem Versorgungsleitungsabschnitt 16 verbunden ist. Es sind ferner Drucksensoren 80, 82 zum Erfassen der Drücke an dem zweiten Arbeitsanschluss 24 der Steuerventileinrichtung 22 sowie der Relaisausgangsleitung 62 vorgesehen.

In dem in Figur 1 dargestellten Schaltzustand ist der zweite Arbeitsausgang der Steuerventileinrichtung 22 über die Steuer- und Entlüftungsventileinrichtung 72 entlüftet, so dass in Abwesenheit einer Druckbeaufschlagung über die Betriebsbremsleitung 68 auch der Steuereingang 56 des Relaisventils 58 entlüftet ist. Folglich sind die nicht dargestellten Federspeicherzylinder drucklos, so dass sich die Feststellbremse in ihrer Parkstellung befindet. Zum Überführen der Feststellbremse in eine Fahrstellung wird nun die Steuer- und Entlüftungsventileinrichtung 72 umgeschaltet. Folglich baut sich insbesondere in dem Steuerleitungszweig 48, der Relaissteuerleitung 52 und an dem Relaissteuereingang 56 ein Druck auf. Dieser Druck führt beim Überschreiten eines Schwellenwertes zum Durchschalten des Relaisventils 58, so dass die Federspeicherzylinder mit Druck beaufschlagt werden und die Feststellbremse gelöst wird. Ebenso ist der Druck in der Steuerleitung 48 die treibende Kraft zum Umschalten des Steuerventils 22. Je nach Schaltstrategie kann dieses Umschalten erfolgen, bevor die Steuer- und Entlüftungseinrichtung 72 wieder in ihren dargestellten stromlosen Zustand überführt wird. Soll das Umschalten stattfinden, während sich die Steuer- und Entlüftungsventileinrichtung 72 noch in ihrem bestromten Zustand befindet, so ist die Steuerventileinrichtung 22 mit solchen Wirkflächen auszustatten, dass die an den Anschlüssen anstehenden Drücke Kräfte erzeugen, welche die Federkraft der Steuerventileinrichtung 22 überwinden. Die Schaltstrategie, welche ein Umschalten der Steuerventileinrichtung 22 gegen die Federkraft nach einem Umschalten der Steuer- und Entlüftungsventileinrichtung 72 in ihren umbestromten Zustand erlaubt, beruht auf später erläuterten dynamischen Abläufen. Wurde somit also wie auch immer erreicht, dass die Steuerventileinrichtung 22 umgeschaltet hat, so kann sich der Druck an den Steuereingängen 50 und 56 der Steuerventileinrichtung 22 und des Relaisventils 58 weiter aufbauen, da die entsprechenden Leitungszweige nun aus dem Versorgungsleitungsabschnitt 16 mit Druckluft versorgt werden. Insbesondere verbleibt die Steuerventileinrichtung 22 beim Ausbleiben weiterer Schaltvorgänge der Magnetventile 14, 72, 78 in ihrem Zustand. Ein Stromausfall hat hierauf keinen Einfluss, so dass kein unbeabsichtigtes Überführen der Feststellbremsanlage in ihren Parkzustand stattfinden kann. Ein solches Umschalten erfolgt hingegen planmäßig dadurch, dass das Entlüftungsmagnetventil 78 bestromt wird, so dass der Druck im Versorgungsleitungsabschnitt und somit auch an den Steuereingängen 50, 56 der Steuerventileinrichtung 22 und des Relaisventils 56 abnimmt. Dies führt zu einem Umschalten der Steuerventileinrichtung 22 in ihre dargestellte Stellung und zu einem nachfolgenden vollständigen Entlüften der Steuereingänge 50, 56 der Steuerventileinrichtung 22 und des Relaisventils 58. Die so eingenommene Parkstellung ist durch die Federwirkung in der Steuerventileinrichtung 22 gesichert, so dass ein Stromausfall wiederum nicht dazu führen kann, dass unbeabsichtigt ein Übergang vom Parkzustand in den Fahrzustand erfolgen kann.

Ein weiterer Schaltzustand des Systems liegt dann vor, wenn das Entlüftungsventil 78, das Versorgungsmagnetventil 14 und die Steuer- und Entlüftungsventileinrichtung 72 bestromt werden, so dass der Steuereingang 50 der Steuerventileinrichtung 22 und der Steuereingang 56 des Relaisventils entlüftet werden, der Steuereingang 26 des Anhängersteuerventils 30 hingegen belüftet wird. Diese Druckverhältnisse im System bewirken ein Lösen der Anhängerbremse, während die Feststellbremse des Zugfahrzeugs eingelegt wird oder bleibt. Es liegt also ein Anhängertestzustand vor, bei dem überprüft werden kann, ob es der gesamte aus Zugfahrzeug und Anhänger bestehende Zug alleine von der Feststellbremse des Zugfahrzeugs gehalten werden kann.

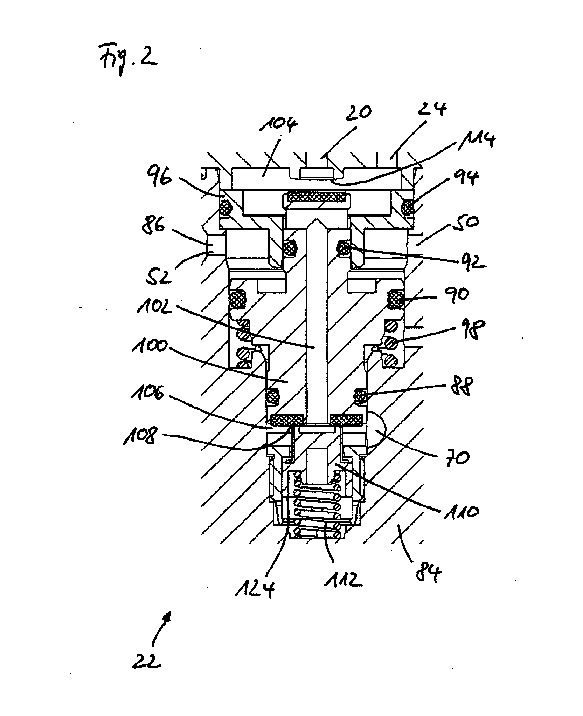

Figur 2 zeigt eine Steuerventileinrichtung 22 mit einem verschiebbaren Ventilsitz 108 in einer Fahrstellung. Ein Ventilgehäuse 84 beherbergt die Steuerventileinrichtung 22, welche einen ersten Arbeitsanschluss 20, einen zweiten Arbeitsanschluss 24, einen Steuereingang 50 und einen Entlüftungsanschluss 70 aufweist. Ferner ist ein Relaisanschluss 86 vorgesehen, der mit der Relaissteuerleitung 52 verbunden wird und an dem derselbe Druck wie am Steuereingang 50 herrscht. Die Steuerventileinrichtung 22 enthält einen Steuerkolben 100, der über drei als radiale Dichtungen wirkende O-Ringe 88, 90, 92 in dem Ventilgehäuse 84, beziehungsweise einer in dem Ventilgehäuse 84 über einen O-Ring 94 abdichtend eingelegten Manschette 96 geführt wird. Es ist eine Feder 98 vorgesehen, die den Steuerkolben 100 mit Kraft beaufschlagt. Der Steuerkolben 100 hat eine zentrale Bohrung 102, über die ein Arbeitsraum 104 mit einem Entlüftungsraum 106 kommunizieren kann. Im dargestellten Zustand der Steuerventileinrichtung 22 wird diese Kommunikation jedoch durch den abdichtend wirkenden ersten Ventilsitz 108 unterbunden. Der erste Ventilsitz 108 kommt durch ein Zusammenspiel des Steuerkolbens 100 mit einem Ventilsitzkolben 110 zur Wirkung, wobei sich der Ventilsitzkolben 110 über eine Feder 112 an dem Ventilgehäuse 84 abstützt.

Der in Figur 2 dargestellte Schaltzustand der Steuerventileinrichtung 22 liegt dann vor, wenn über den Arbeitsanschluss 20 und den Steuereingang 50 Druckluft zugeführt wird, während der Entlüftungsänschluss 70 entlüftet ist.

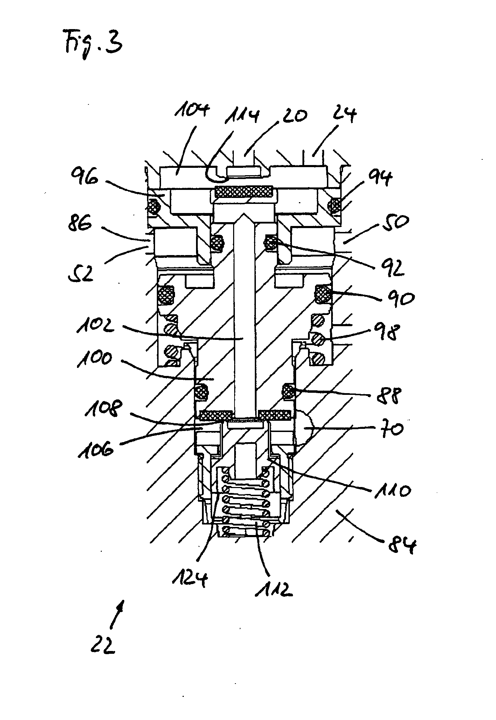

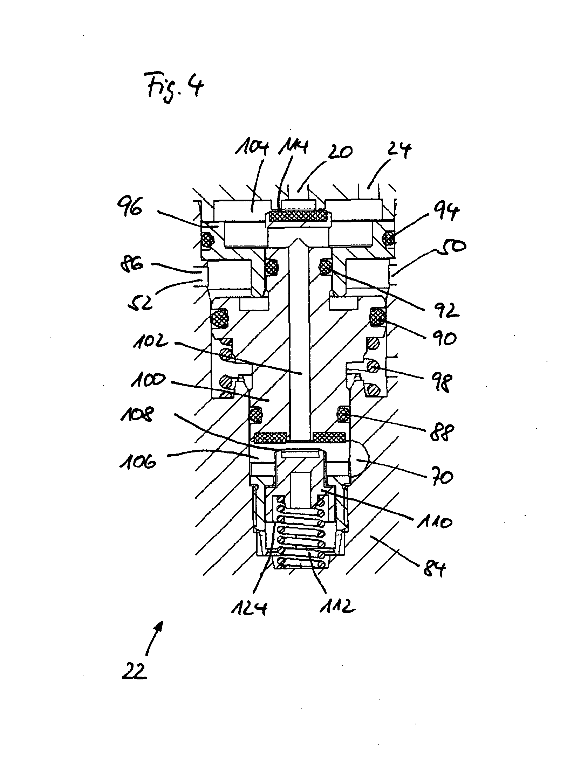

Figur 3 zeigt die Steuerventileinrichtung 22 mit verschiebbarem Ventilsitz 108 in einer Zwischenstellung. Figur 4 zeigt die Steuerventileinrichtung 22 mit verschiebbarem Ventilsitz 108 in einer Parkstellung. Soll die Steuerventileinrichtung 22 von dem in Figur 2 dargestellten Schaltzustand, dem Fahrzustand, in den in Figur 4 dargestellten Schaltzustand, den Parkzustand, überführt werden, so wird der Arbeitsanschluss 20 entlüftet. Hierdurch können die Federn 98, 112 den Steuerkolben 100 gegen den abnehmenden Druck in dem Arbeitsraum bewegen. Dabei folgt der verschiebbare Ventilsitzkolben 110 dem Steuerkolben 100. Ein hierdurch eingenommener Zwischenzustand ist in Figur 3 gezeigt. Der Steuerkolben 100 hat sich bereits in eine den Arbeitsraum 104 verkleinernde Richtung bewegt, der Ventilsitz 108 dichtet jedoch nach wie vor den Arbeitsraum 104 gegen den Entlüftungsraum 106 ab. Folglich musste bis zu diesem Zeitpunkt ein eventuelles Anhaften des Steuerkolbens 100 am Ventilsitz 108 noch nicht überwunden werden. Lediglich die Haftreibungskraft der O-Ringe 88, 90, 92 wirkte der Bewegung des Steuerkolbens 100 bisher entgegen. Erst beim nachfolgenden Übergang zu dem Schaltzustand gemäß Figur 4 müssen eventuelle Anhaftkräfte des Ventilsitzes 108 überwunden werden, während gleichzeitig nur noch die Gleitreibung der O-Ringe 88, 90, 92 zur Wirkung kommt. Somit ist das Öffnen des Ventilsitzes 108 von einer durch die Haftreibung der radialen Dichtungen bewirkte Gegenkraft befreit. Ist der Zustand in Figur 4 erreicht, so schließt der Steuerkolben 110 einen zweiten Ventilsitz 114, wodurch die Arbeitsanschlüsse 20, 24 voneinander getrennt werden. Folglich gelangt keine Druckluft mehr zu dem Arbeitsausgang 24 und bei externer Verschaltung gemäß Figur 1 auch keine Druckluft mehr zum Steuereingang 50.

Während die Anfangsbewegung des Steuerkolbens bei dem Übergang aus der Fahrstellung gemäß Figur 2 zur Parkstellung gemäß Figur 4 durch die Wirkung der Feder 112 unterstützt wird, behindert diese Feder 112 die anfängliche Bewegung des Steuerkolbens 100 beim Übergang von der Parkstellung gemäß Figur 4 zur Fahrstellung gemäß Figur 2 nicht. Indem der Entlüftungsanschluss 70 in dem Zustand gemäß Figur 4 mit Druck beaufschlagt wird, baut sich auch ein Druck in dem Arbeitraum 104 und, bei externer Verschaltung gemäß Figur 1, am Steuereingang 50 der Steuerventileinrichtung 22 auf. Nun müssen die Kraft der Feder 98 und die Haftreibung der O-Ringe 88, 90, 92 überwunden werden, nicht aber die Kraft der Feder 112. Diese spielt erst beim Schließen des Ventilsitzes 108 wieder eine Rolle, wobei dann aber bereits nur noch die Gleitreibung der O-Ringe 88, 90, 92 der Bewegung des Steuerkolbens 100 entgegenwirkt, wodurch die Steuerventileinrichtung 22 sicher in ihre Fahrstellung gemäß Figur 2 überführt werden kann.

Für den Übergang aus der Fahrstellung gemäß Figur 2 in die Parkstellung gemäß Figur 4 ist es besonders nützlich, wenn die Anfangsbewegung des Steuerkolbens 100 dadurch unterstützt wird, dass der Entlüftungsausgang 70 belüftet wird. Bei der Schaltung gemäß Figur 1 erfolgt dies durch Bestromen des Steuer- und Entlüftungsmagnetventils 72. Ist der Ventilsitzkolben 110 dann in der Weise im Ventilgehäuse 84 angeordnet, dass seine dem Ventilsitz 108 abgewandte, also der Feder 112 zugewandte Fläche 124 von dem über den Entlüftungsanschluss 70 zugeführten Druck beaufschlagt wird, so unterstützt die hierdurch entstehende Kraft in nützlicher Weise die Bewegung des Steuerkolbens in Richtung des zweiten Ventilsitzes 114.

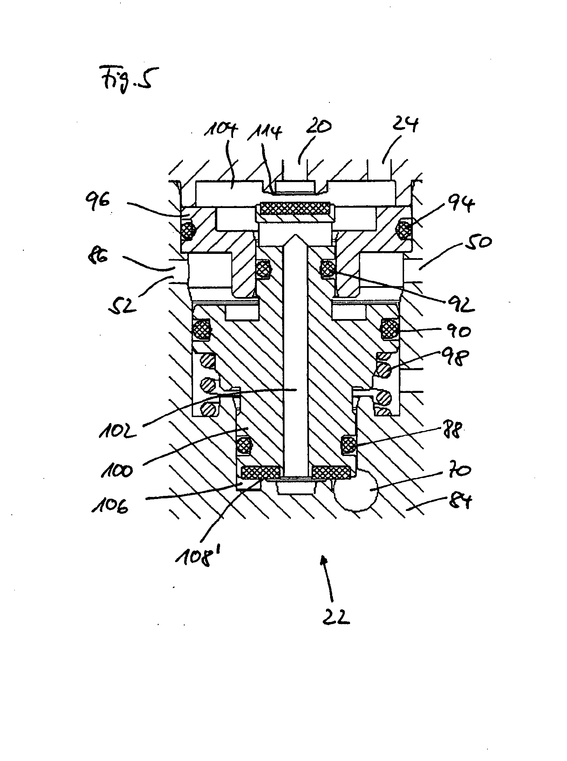

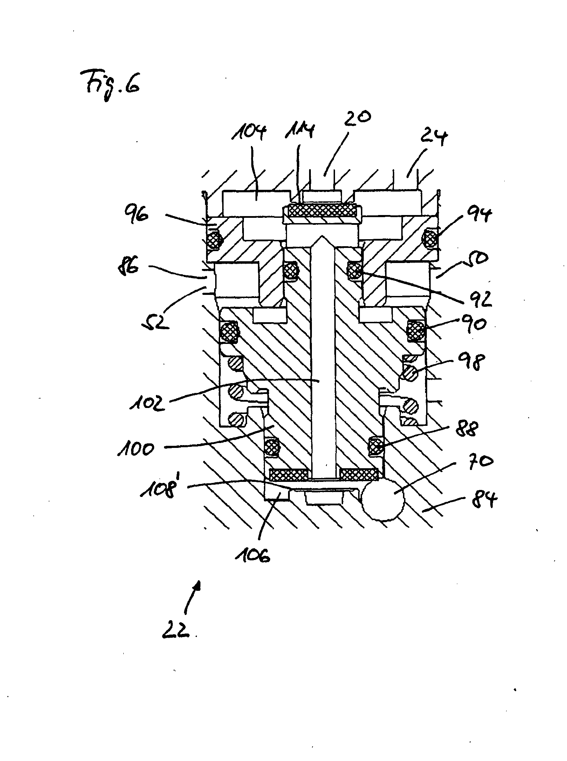

Figur 5 zeigt eine Steuerventileinrichtung 22 mit einem festen Ventilsitz 108' in einer Fahrstellung. Im Gegensatz zu der Ausführungsform gemäß den Figuren 2 bis 4 hat die Steuerventileinrichtung 22 gemäß Figur 5 keinen verschiebbaren Ventilsitzkolben. Vielmehr ist der Ventilsitz 108' fest. Gleichwohl kann der Übergang von der in Figur 5 dargestellten Fahrstellung zu der in Figur 6 dargestellten Parkstellung unterstützt werden, indem der Entlüftungsanschluss 70 belüftet wird, während gleichzeitig der Arbeitsanschluss 20 entlüftet wird.

Die bisher im Zusammenhang mit den Figuren 2 bis 6 beschriebenen Steuerventileinrichtungen sind durch drei O-Ringe 88, 90, 92 geführt und abgedichtet. Die Wirkflächen des Steuerkolbens 100 sind so ausgelegt, dass ein Übergang von der Parkstellung in die Fahrstellung bei bestromter Steuer- und Entlüftungsmagnetventileinrichtung 72 gemäß Figur 1 erfolgt. Sobald die Steuerventileinrichtung 22 dann in die Fahrstellung umgeschaltet ist, kann die Steuer- und Entlüftungsventileinrichtung 72 ohne Wirkung für den Schaltzustand der Steuerventileinrichtung 22 in ihren stromlosen Zustand überführt werden.

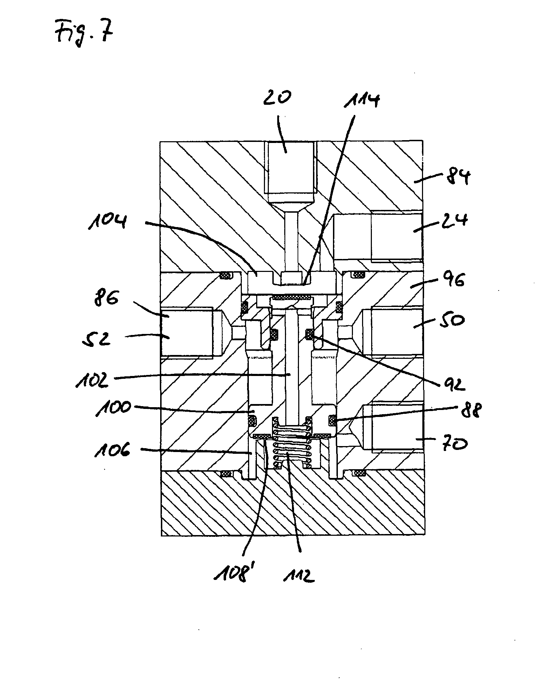

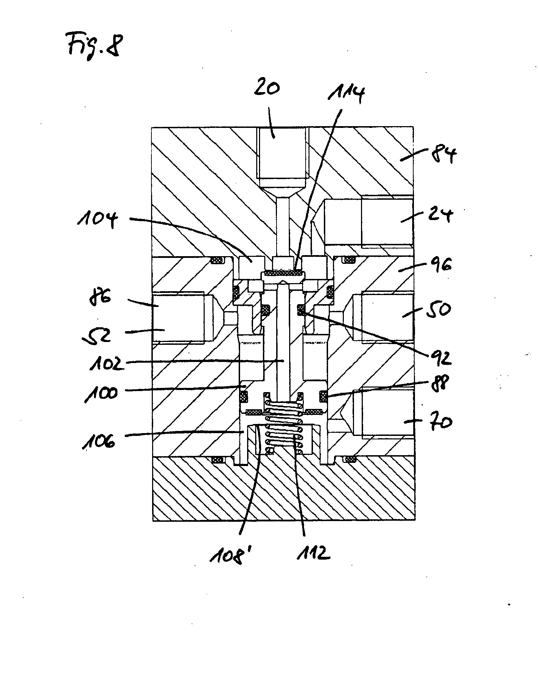

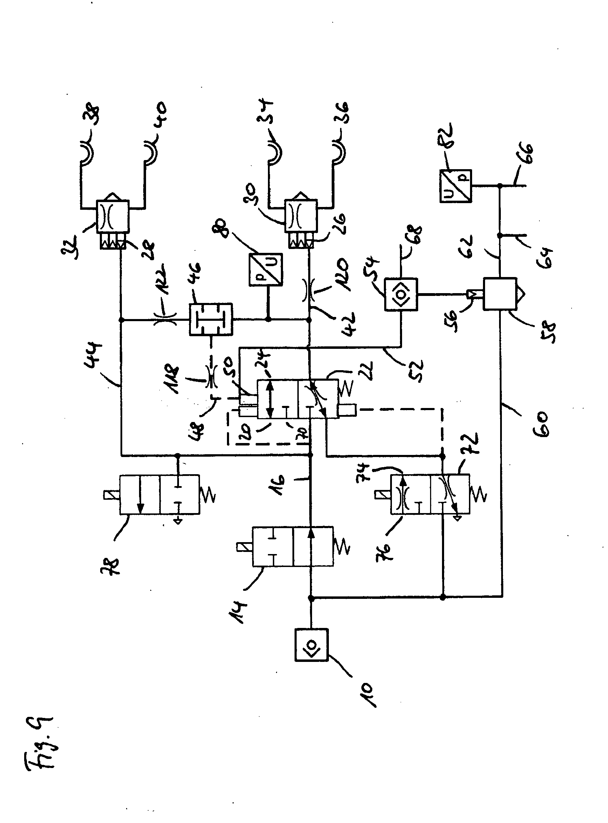

Figur 7 zeigt eine Steuerventileinrichtung 22 mit einem zwei radiale Dichtungen 88, 92 aufweisenden Steuerkolben 100 in einer Fahrstellung. Figur 8 zeigt die Steuerventileinrichtung 22 mit einem zwei Radialdichtungen 88, 92 aufweisenden Steuerkolben 100 in einer Parkstellung. Die hier dargestellte Steuerventileinrichtung 22 hat einen Steuerkolben 100, der über nur zwei radiale Dichtungen, nämlich die O-Ringe 88, 92 geführt wird. Die Verhältnisse der Wirkflächen sind unter Berücksichtigung der Kraft der Feder 116 derart, dass die Steuerventileinrichtung 22 bei bestromter Steuer- und Entlüftungsmagnetventileinrichtung 72 nicht von ihrer in Figur 8 gezeigten Parkstellung in ihre in Figur 7 dargestellte Fahrstellung überführt wird. Dieser Übergang kann durch Veränderungen der Peripherie der Steuerventileinrichtung 22 aber dennoch herbeigeführt werden, was im Zusammenhang mit den nachfolgenden Figuren 9 bis 11 erläutert wird. Die Steuerventileinrichtung 22 gemäß den Figuren 7 und 8 hat einen festem Ventilsitz 108'. Ebenso kann sie aber mit einem verschiebbaren Ventilsitz ausgestattet sein.

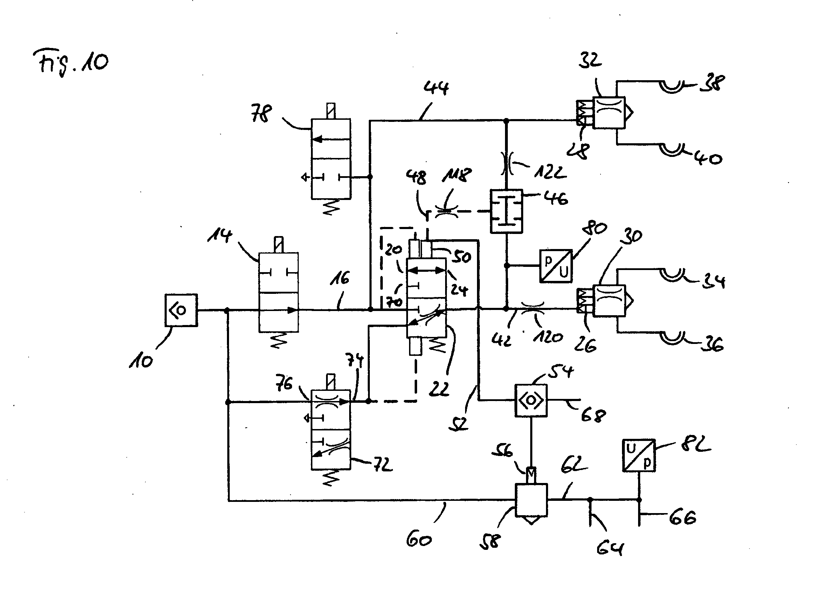

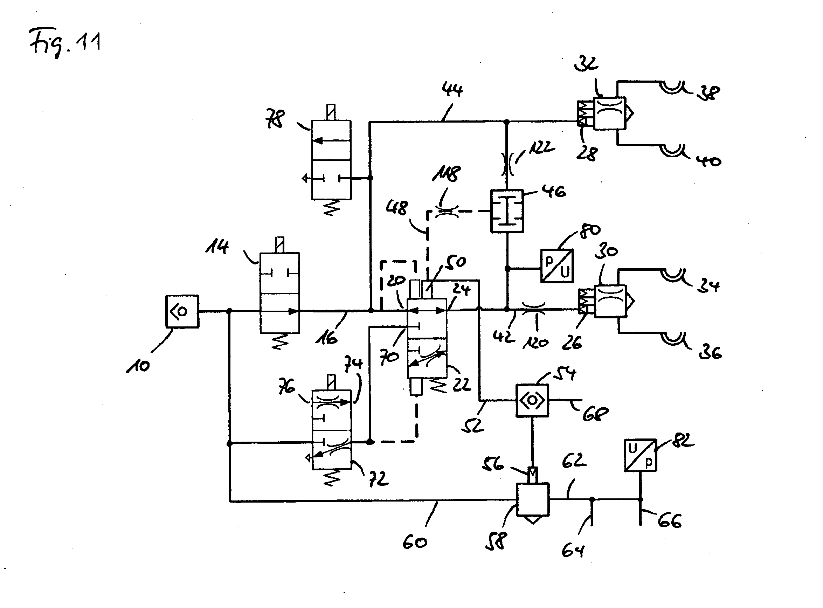

Die Figuren 9 bis 11 zeigen schematisch ein elektrisches Feststellbremssystem in drei verschiedenen Schaltzuständen. Das in den Figuren 9 bis 11 dargestellte System unterscheidet sich von dem in Figur 1 dargestellten System im Wesentlichen dadurch, dass in der Steuerleitung 48, dem Anhängersteuerungsleitungszweig 42, und dem zum Anhängersteuerungsleitungszweig 44 führenden Eingangsanschluss des Select-Low-Ventils 46 Drosseln 118, 120, 122 vorgesehen sind. Zudem kann die Steuerventileinrichtung 22 eine Drossel im Entlüftungspfad ihres Steuerkolbens aufweisen. Soll nun ein Übergang von dem in Figur 9 dargestellten Zustand, der der Parkstellung entspricht, in den in Figur 11 dargestellten Zustand, der der Fahrstellung entspricht, erfolgen, so wird zunächst die Steuer- und Entlüftungsmagnetventileinrichtung 72 umgeschaltet, wie in Figur 10 dargestellt. Wie im Zusammenhang mit den Figuren 7 und 8 erwähnt, kann die Steuerventileinrichtung 22 so ausgelegt sein, dass die sich hierdurch einstellenden Druckverhältnisse nicht zu einem Umschalten der Steuerventileinrichtung 22 führen. Hat sich aber nach einer gewissen Bestromungszeit der Steuer- und Entlüftungsmagnetventileinrichtung 72 ein gewisses Druckniveau in der Steuerleitung 48 aufgebaut, so kann die Steuerventileinrichtung 22 dadurch umgeschaltet werden, dass durch ein stromlos Schalten der Steuer- und Entlüftungsmagnetventileinrichtung 72 diese in ihren den Entlüftungsanschluss 70 der Steuerventileinrichtung 22 entlüftenden Zustand überführt wird. Aufgrund der Drossel 118 kann sich der Druck am Entlüftungsanschluss 70 nämlich schneller abbauen als am Steuereingang 48. Hierdurch kann es der über den Steuereingang 50 auf den Steuerkolben 100 wirkenden Kraft gelingen, den Steuerkolben 100 gegen die Federkraft und gegen den verminderten Druck am Entlüftungsanschluss 70 zu bewegen, so das letztlich der in Figur 11 dargestellte Schaltzustand eingenommen wird. In diesem Schaltzustand kann dann die Druckluft wieder über den Versorgungsleitungsabschnitt 16 und die Arbeitsanschlüsse 20, 24 der Steuerventileinrichtung 22 zum Steuereingang 50 der Steuerventileinrichtung 22 gelangen, so dass der Fahrzustand stabil ist und auch bei Stromausfall aufrechterhalten bleibt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Rückschlagventil
- 12: Filtereinheit
- 14: Versorgungsmagnetventil
- 16: Versorgungsleitungsabschnitt
- 18: Drossel
- 20: erster Arbeitsanschluss
- 22: Steuerventileinrichtung
- 24: zweiter Arbeitsanschluss
- 26: Steuereingang
- 28: Steuereingang
- 30: Anhängersteuermodul
- 32: Anhängersteuermodul
- 34: Versorgungsanschluss
- 36: Steueranschluss
- 38: Versorgungsanschluss
- 40: Steueranschluss
- 42: Anhängersteuerleitungszweig
- 44: Anhängersteuerleitungszweig
- 46: Select-Low-Ventil
- 48: Steuerleitung
- 50: Steuereingang
- 52: Relaissteuerleitung
- 54: Wechselventil
- 56: Relaissteuereingang
- 58: Relaisventil
- 60: Relaisversorgungsleitung
- 62: Relaisversorgungsleitung
- 64: Leitungszweig
- 66: Leitungszweig
- 68: Betriebsbremsleitung
- 70: Entlüftungsanschluss
- 72: Steuer- und Entlüftungsventileinrichtung
- 74: Anschluss
- 76: Anschluss
- 78: Entlüftungsmagnetventil
- 80: Drucksensor
- 82: Drucksensor
- 84: Ventilgehäuse
- 86: Relaisanschluss
- 88: O-Ring
- 90: O-Ring
- 92: O-Ring
- 94: O-Ring
- 96: Manschette
- 98: Feder
- 100: Steuerkolben
- 102: Bohrung
- 104: Arbeitsraum
- 106: Entlüftungsraum
- 108: erster Ventilsitz
- 108': erster Ventilsitz
- 110: Ventilsitzkolben
- 112: Feder
- 114: zweiter Ventilsitz
- 116: Feder
- 118: Drossel
- 120: Drossel
- 122: Drossel
- 124: Fläche

## Patentansprüche

1. Ventileinrichtung (22) für eine pneumatische Bremsanlage eines Nutzfahrzeugs, mit
- einem Ventilgehäuse (84),
- einem Steuerkolben (100), der über radiale Dichtungen (88, 90, 92) in dem Ventilgehäuse (84) axial verschiebbar geführt ist,
- einem ersten Arbeitsanschluss (20),
- einem zweiten Arbeitsanschluss (24),
- einem pneumatischen Steuereingang (50) und
- einem Entlüftungsanschluss (70),
- wobei in einem ersten Schaltzustand der Ventileinrichtung (22) der Steuereingang (50) belüftet ist, wodurch der Steuerkolben (100) gegen eine Federkraft in einer ersten einen ersten Ventilsitz (108) abdichtenden Endstellung gehalten wird, so dass der erste Ventilsitz (108) den zweiten Arbeitsanschluss (24) gegen den Entlüftungsanschluss (70) abdichtet, und wodurch der Steuerkolben (100) von einem zweiten Ventilsitz (114) abgehoben ist, so dass der erste Arbeitsanschluss (20) mit dem zweiten Arbeitsanschluss (24) verbunden ist, und
- wobei in einem zweiten Schaltzustand der Ventileinrichtung (22) der Steuereingang (50) entlüftet ist, wodurch der Steuerkolben (100) durch die Federkraft von dem ersten Ventilsitz (108) abgehoben ist, so dass der erste Ventilsitz (108) den zweiten Arbeitsanschluss (24) mit dem Entlüftungsanschluss (70) verbindet, und wodurch der Steuerkolben (100) mit der Federkraft in einer zweiten den zweiten Ventilsitz (114) abdichtenden Endstellung gehalten wird, so dass der zweite Ventilsitz (114) den ersten Arbeitsanschluss (20) gegen den zweiten Arbeitsanschluss (24) abdichtet,
**dadurch gekennzeichnet, dass** der erste Ventilsitz (108) in Bewegungsrichtung des Steuerkolbens (100) verschiebbar ist.

2. Ventileinrichtung nach Anspruch 1, **dadurch gekennzeichnet, dass** der erste Ventilsitz (108) mit einer Federkraft beaufschlagt ist, so dass der erste Ventilsitz (108), wenn der Steuerkolben (100) seine erste Endstellung verlässt, der Bewegung des Steuerkolbens (100) folgt.

3. Ventileinrichtung nach Anspruch 1 oder 2, **dadurch gekennzeichnet, dass** die Verschiebbarkeit des ersten Ventilsitzes (108) in der Weise begrenzt ist, dass der erste Ventilsitz (108) dem Steuerkolben (100) nicht bis zu seiner zweiten Endstellung folgen kann.

4. Ventileinrichtung nach einem der vorangehenden Ansprüche, **dadurch gekennzeichnet, dass** eine dem ersten Ventilsitz (108) abgewandte Wirkfläche eines den ersten Ventilsitz tragenden Ventilsitzkolbens (110) in einem Entlüftungsraum (106) angeordnet ist, der sich zumindest in dem ersten Schaltzustand der Ventileinrichtung (22) auf dem Druckniveau des Entlüftungsanschlusses (70) befindet.

5. Elektrisch betätigbares Feststellbremssystem für eine pneumatische Bremsanlage, mit einer als Steuerventileinrichtung wirkenden Ventileinrichtung (22) nach einem der vorhergehenden Ansprüche, wobei
- der erste Arbeitsanschluss (20) wahlweise von einer Druckluftquelle mit Druckluft versorgt oder entlüftet werden kann,
- der zweite Arbeitsanschluss (24) mit einem Druckluftverbraucher (26, 50, 56) koppelbar ist,
- der pneumatische Steuereingang (50) zumindest mittelbar mit dem Steuereingang (56) eines Relaisventils (58) für die Feststellbremse gekoppelt ist und
- der Entlüftungsanschluss (70) mit einer Steuer- und Entlüftungsventileinrichtung (72) gekoppelt ist.

6. Elektrisch betätigbares Feststellbremssystem nach Anspruch 5, **dadurch gekennzeichnet, dass** die Steuer- und Entlüftungsventileinrichtung (72) geeignet ist, den Entlüftungsanschluss (70) zu belüften.

7. Verfahren zum Überführen eines elektrisch betätigbaren Feststellbremssystems nach Anspruch 6 von einem Fahrzustand in einen Parkzustand, **dadurch gekennzeichnet, dass** der Entlüftungsanschluss (70) durch die Steuer- und Entlüftungsventileinrichtung (72) belüftet wird während der Steuereingang (50) entlüftet wird.

## Claims

1. Valve device (22) for a pneumatic brake system of a utility vehicle, having
- a valve housing (84),
- a control piston (100) guided in an axially displaceable manner via radial seals (88, 90, 92) in the valve housing (84),
- a first working connection (20),
- a second working connection (24),
- a pneumatic control inlet (50) and
- a venting connection (20),
- wherein, in a first switching state of the valve device (22), the control inlet (50) is pressurised, whereby the control piston (100) is held against a spring force in a first end position sealing a first valve seat (108), so that the first valve seat (108) seals the second working connection (24) against the venting connection (70), and whereby the control piston (100) is lifted off from a second valve seat (114), so that the first working connection (20) is connected to the second working connection (24), and
- wherein, in a second switching state of the valve device (22), the control inlet (50) is vented, whereby the control piston (100) is lifted off from the first valve seat (108) through the spring force, so that the first valve seat (108) connects the second working connection (24) to the venting connection (70), and whereby the control piston (100) is held with the spring force in a second end position sealing the second valve seat (114), so that the second valve seat (114) seals the first working connection (20) against the second working connection (24),
**characterised in that** the first valve seat (108) can be displaced in the movement direction of the control piston (100).

2. Valve device according to claim 1, **characterised in that** the first valve seat (108) is subjected to a spring force, so that the first valve seat (108) follows the movement of the control piston (100) when the control piston (100) leaves its end position.

3. Valve device according to claim 1 or 2, **characterised in that** the displaceability of the first valve seat (108) is limited in such a way that the first valve seat (108) cannot follow the control piston (100) as far as its second end position.

4. Valve device according to one of the preceding claims, **characterised in that** a working surface, facing away from the first valve seat (108), of a valve seat piston (110) carrying the first valve seat is arranged in a venting chamber (106) placed, at least in the first switching state of the valve device (22), at the pressure level of the venting connection (70).

5. Electrically actuated handbrake system for a pneumatic brake system, having a valve device (22) according to one of the preceding claims acting as a control valve device, wherein
- the first working connection (20) can optionally be supplied by a compressed air source with compressed air or vented,
- the second working connection (24) can be coupled to a compressed air consumer (26, 50, 56),
- the pneumatic control inlet (50) is coupled at least indirectly to the control inlet (56) of a relay valve (58) for the handbrake and
- the venting connection (70) is coupled to a control and venting valve device (72).

6. Electrically actuated handbrake system according to claim 5, **characterised in that** the control and venting valve device (72) is suited to pressurise the venting connection (70).

7. Method for changing an electrically actuated handbrake system according to claim 6 from a driving state into a parking state, **characterised in that** the venting connection (70) is pressurised by the control and venting valve device (72) while the control inlet (50) is vented.

## Revendications

1. Dispositif (22) de vanne pour un système pneumatique de frein d'un véhicule utilitaire comprenant
- un corps (84) de vanne,
- un piston (100) de commande, qui est guidé à coulissement axial dans le corps (84) de vanne par des garnitures (88, 90, 92) radiales d'étanchéité,
- un premier raccord (20) de travail,
- un deuxième raccord (24) de travail,
- une entrée (50) de commande de pneumatique et
- un raccord (70) de mise à l'atmosphère,
- dans lequel, dans un premier état de commutation du dispositif (22) de vanne, l'entrée (50) de commande est alimentée en air de sorte que le piston (100) de commande est maintenu à l'encontre d'une force de ressort dans une première position d'extrémité s'appliquant avec étanchéité sur un premier siège (108) de vanne, de manière à ce que le premier siège (108) de vanne rende étanche le deuxième raccord (24) de travail par rapport au raccord (70) de mise à l'atmosphère, et de sorte que le piston (100) de commande soit soulevé d'un deuxième siège (114) de vanne de manière à ce que le premier raccord (20) de travail communique avec le deuxième raccord (24) de travail et
- dans lequel, dans un deuxième état de commutation du dispositif (22) de vanne, l'entrée (50) de commande est mise à l'atmosphère de sorte que le piston (100) de commande est soulevé du premier siège (108) de vanne par la force du ressort, de manière à ce que le premier siège (108) de vanne mette le deuxième raccord (24) de travail en communication avec le raccord (70) de mise à l'atmosphère et de sorte que le piston (100) de commande soit maintenu par la force du ressort dans une deuxième position d'extrémité rendant étanche le deuxième siège (114) de vanne, de manière à ce que le deuxième siège (114) de vanne rende étanche le premier raccord (20) de travail par rapport au deuxième raccord (24) de travail,
**caractérisé en ce que** le premier siège (108) de vanne est monté coulissant dans la direction de déplacement du piston (100) de commande.

2. Dispositif de vanne suivant la revendication 1, **caractérisé en ce que** le premier siège (108) de vanne est soumis à l'action d'un ressort, de manière à ce que le premier siège (108) de vanne suive, lorsque le piston (100) de commande quitte sa première position d'extrémité, le mouvement du piston (100) de commande.

3. Dispositif de vanne suivant la revendication 1 ou 2, **caractérisé en ce que** l'aptitude à coulisser du premier siège (108) de vanne est limitée, de manière à ce que le premier siège (108) de vanne ne puisse pas suivre le piston (100) de commande jusqu'à sa deuxième position d'extrémité.

4. Dispositif de vanne suivant l'une des revendications précédentes, **caractérisé en ce qu'**une surface active, éloignée du premier siège (108) de vanne d'un piston (110) de siège de vanne portant le premier siège de vanne, est disposée dans un espace (106) de mise à l'atmosphère qui se trouve, au moins dans le premier état de commutation du dispositif (22) de vanne, au niveau de pression du raccord (70) de mise à l'atmosphère.

5. Système de frein de stationnement pouvant être actionné électriquement pour un système pneumatique de frein, comprenant un dispositif (22) de vanne agissant comme dispositif de vanne de commande suivant l'une des revendications précédentes, dans lequel
- le premier raccord (20) de travail peut au choix être alimenté en air comprimé par une source d'air comprimé ou être mis à l'atmosphère,
- le deuxième raccord (24) de travail peut être couplé à un consommateur (26, 50, 56) d'air comprimé,
- l'entrée (50) de commande pneumatique est couplée au moins indirectement à l'entrée (56) de commande d'une vanne (58) relais pour le frein de stationnement et
- le raccord (70) de mise à l'atmosphère est couplé à un dispositif (72) de vanne de commande et de mise à l'atmosphère.

6. Système de frein de stationnement pouvant être actionné électriquement suivant la revendication 5, **caractérisé en ce que** le dispositif (72) de vanne de commande et de mise à l'atmosphère est propre à alimenter en air le raccord (70) d'alimentation en air.

7. Procédé pour faire passer un système de frein de stationnement pouvant être actionné électriquement suivant la revendication 6 d'un état de marche à un état de stationnement, **caractérisé en ce que** le raccord (70) de mise à l'atmosphère est alimenté en air par le dispositif (72) de vanne de commande et de mise à l'atmosphère, tandis que l'entrée (50) de commande est mise à l'atmosphère.
